# EUROPÄISCHE PATENTSCHRIFT

(11) **EP 0 938 984 B1**
(45) Veröffentlichungstag und Bekanntmachung des Hinweises auf die Patenterteilung: **02.05.2003**
(21) Anmeldenummer: 99103333.3
(22) Anmeldetag: 20.02.1999
(51) Int. Cl.: B60B 21/06, B60B 21/08

(54) **Sicherheitsfelge für Fahrräder und ähnliche Fahrzeuge**
Safety rim for bicycles and similar vehicles
Jante de sécurité pour bicyclettes et véhicules similaires

(30) Priorität: 25.02.1998 DE 29803256 U
(43) Veröffentlichungstag der Anmeldung: 01.09.1999
(73) Patentinhaber: Heger, Heinz, 09557 Flöha (DE); Weber, Uwe, 09573 Augustusburg (DE)
(72) Erfinder: Heger, Heinz, 09557 Flöha (DE); Weber, Uwe, 09573 Augustusburg (DE)
(74) Vertreter: Horn, Klaus, Dr.

(56) Entgegenhaltungen:
- DE-A- 4 200 227
- DE-A- 19 523 043
- DE-C- 19 607 752

## Beschreibung

Die Erfindung betrifft das technische Gebiet der Fahrzeuge, insbesondere Felgen mit besonders gestaltetem Querschnitt und Bremsflächen. Dabei bezieht sie sich im weiteren auf Felgen für Fahrräder oder ähnliche Fahrzeuge mit den Merkmalen des Oberbegriffes des Hauptanspruches.

Eine Einrichtung nach dem Oberbegriff des Anspruchs 1 ist zum Beispiel aus der DE 42 00 227 A bekannt.

Bisher als Sicherheitsfelgen bekanntgemachte Fahrzeugfelgen, sind solche, die mit bestimmten Konstruktionselementen und/oder Hohlräumen bzw. Hohlkammern ausgestaltet sind. Die dabei verfolgte Zweckbestimmung ist i.d.R. auf ein Notlaufverhalten gerichtet.

Eine Hohlkammeranwendung ist aber auch bei Felgen von Fahrrädern bzw. denen ähnliche Fahrzeuge bekannt geworden, siehe z.B. DE OS 42 00 227, DE OS 195 23 043, DE GM 295 20 629, DE PS 196 07 752 mit DE GM 296 21 199. Der Zweck dieser konstruktiven Ausgestaltung solch bekannter Felgen richtet sich auf die Stabilitätserfordernisse der Felge selbst, die Anordnung der Bremsanlage, insbesondere als Felgenbremse, sowie deren Verhalten und Funktionssicherheit im Zusammenwirken mit der Felge, da beim derzeitig hochentwickelten technischen Standard der Fahrzeuge, einerseits das Sicherheitserfordernis, andererseits das Sicherheitsbedürfnis der Verbraucher herausragende Bedeutung erlangt hat. Durch den Einsatz technisch weiterentwickelter und damit immer leistungsfähigerer Felgenbremsen und Bremsklötzer bei Fahrrädern aller Art treten immer höhere Bremskräfte auf und die Fahrradfelge, insbesondere die meist im wesentlichen planen seitlichen Außenflächen der Felgenflanken, hat sich immer mehr zu einem Verschleißteil, ähnlich einer Scheibenbremse entwickelt. Auch muß davon ausgegangen werden, daß bei vielen Fahrrädern Montage und Einstellung der Felgenbremse nicht immer fachmännisch erfolgt oder ungeeignete Bremsklötze zum Einsatz kommen. Durch z.B. ungleichmäßige Einstellung kann es dazu kommen, daß die Bremsbacken mit den Bremsklötzern entweder nach außen gegen die Reifen, nach innen gegen die Speichen gelangen oder auch nicht plan zum Anliegen kommen. Um dem abzuhelfen zeigt die DE OS 195 23 043 eine Lehre auf, nach der eine Hohlkammerfelge mit zwei sich gegenüber stehenden Felgenflanken und zwei dazwischen, im wesentlichen parallel zueinander und radial angeordnet liegenden Felgenstegflächen, die mit weiteren Verbindungsstegen unterhalb der Felgenflanken Hohlkammern bilden, durch eine definitive Vorgabe der Höhe dieser aus Vollmaterial bestehenden Felgenflanken versehen ist. Eine ungleichmäßige Einstellung der Felgenbremse mag die DE OS 195 23 043 durch ihre höher ausgebildete Felgenflanke wohl kompensieren. Eine Lehre zur Verhinderung des nicht planen Anliegens der Bremsbacken zeigt diese technische Lösung jedoch nicht auf. Der mit der ungleichmäßigen Einstellung auch verbundenen ungleichmäßigen Abnutzung der Felgenflanke wird durch die Lehre dieser DE OS 195 23 043 nicht abgeholfen. Diesem Mangel widmet sich das Gebrauchsmuster DE GM 295 20 629 mit Felgenstegen aus Vollmaterial. Seine technische Lehre sieht zwar nicht vor, die ungleichmäßige Abnutzung durch technische Mittel zu verhindern, wohl aber, diese kontrollierbar zu machen. Zu diesem Zwecke beansprucht diese technische Lösung das schon seit langem in der Reifenindustrie bekannte Einbringen von Markierungen in Form von Ausnehmungen und Rillen in die zu kontrollierenden Fläche, hier die äußere Seitenfläche der Felgenflanke, die bei Erreichen des Grundes dieser Rillen anzeigen, daß die Sicherheit des Bauteiles unterschritten wird und das jeweilige Fahrzeugelement, hier die Felge, auszuwechseln ist. Neben der deutschland- und weltweiten Vorbekannteheit solcher Arbeitsweisen ist darüber hinaus zu bedenken, daß viel eher ein Bruch der sehr hoch belasteten Felgenflanke infolge der herbeigeführten Schwächung der Felgenflanke, einhergehend mit der damit verbundenen Kerbwirkung erfolgen wird. Ermüdungsbrüche sind die dadurch provozierte Folge, wirkt doch bei der Benutzung jeder Art von Felgenbremsen die Bremskraft über den Bremsklotz auf die äußere Seitenflanke der Felge derart, daß die Felgenflanke nach innen verformt und nach Entlastung der Felgenbremse die Felgenflanke nun wechselnd durch die Gegenwirkung des Reifenluftdruckes nach außen verformt wird. Damit ist die Felgenflanke ständig wechselweiser Biegung ausgesetzt. Durch Eintreten von Felgenflankenwegbrüchen infolge v.g. Wirkungen muß es zwangsläufig zum Blockieren der Räder, zu Zerstörungen von Bremse, Schlauch und Reifen und im schlimmsten Fall zu Unfällen kommen. Darüber hinaus ist für den "normalen" Einsatzfall mit folgenden weiteren zum Teil erheblichen Nachteilen oder Störungen zu rechnen. Schräge Rillen oder Längsrillen können einen Aquaplaning-Effekt hervorrufen. Verschmutzte Rillen heben die von der Lehre der Gebrauchsmusterschrift beabsichtigte Wirkung wieder auf, da die Tiefe der Rillen dann kaum oder schwer kontrollierbar sein werden. Die Farbigkeit der gegebenenfalls farbig ausgefüllten Rillen wird nicht mehr feststellbar sein, da der Abrieb des Bremsklotzes die Bremsfläche verschmiert oder darauf aufträgt. Auch kann es vorkommen, daß sich kleine Steinchen oder ähnliches Material in diesen Rillen verfängt oder verklemmte und damit weitergehende Zerstörungen durch die auf- bzw. einsetzende Felgenbremse auslöst. Das Gebrauchsmuster DE GM 296 21 199 mit der DE PS 196 07 752 beschreiben eine an sich bekannte Form der Hohlkammerfelge und an dieser eine Sicherungseinrichtung, die sich auf das optische Wahrnehmen von Radfahrern in der Dunkelheit bezieht.
Ein weiteres Sicherheitsrisiko, welches bisher durch noch keine offenbarte Schrift abgestellt wurde, stellen die eingebohrten Nippellöcher bei Hohlkammerfelgen dar. Das Einbohren führt zur Gratbildung im Felgenbett und dazu, daß Bohrspähne bzw. Bearbeitungsrückstände in der Hohlkammer der Felge verbleiben. Diese dort verbleibenden Spähne und Rückstände können durch die Nippellöcher Felgenband und Schlauch zerstören. Gratbildung und scharfe Bohrkanten können ebenfalls Risse im Felgenband und eine Zerstörung des Schlauches hervorrufen.

Von vorgenanntem ausgehend liegt der Erfindung die Aufgabe zugrunde, eine Fahrradfelge bereitzustellen, die in Weiterentwicklung bisher bekannter Hohlkammerfelgen und in Ansehung der Tatsache, daß Brems- oder anderer Reibverschleiß dem Grunde nach nicht verhinderbar ist, eine Felgengestaltung mit einer sichernden Felgenflankenausgestaltung im Wirkungsbereich der Felgenbremse aufweist und bei der das Entstehen von Gratbildung im Felgenbett und von Bohrspänen ausgeschlossen ist, wobei dadurch die vorgenannten Mängel überwunden werden.

Diese Aufgabe wird für eine gattungsgemäße Anordnung erfindungsgemäß durch die im kennzeichnenden Teil der Ansprüche 1 bis 5 angegebenen Merkmale gelöst.

Den Sicherheitsrisiken, die bei den bisher bekannten Felgenbauarten mit einer Felgenflanke aus Vollmaterial, womöglich noch mit den materialschwächenden und kerbwirkungserzeugenden Verschleißmarken, auftreten wird mit der erfindungsgemäßen Anordnung der einzelnen Felgenbestandteile vollständig abgeholfen. Die Bremsfläche an den Außenseiten der Felgenflanken werden zwangsläufig mit der Zeit genauso abgeschliffen, wie die der vobekannten Bauart. Mit der dann bei der vorbekannten Bauart dabei immer dünner werdenden Felgenflanke stellt sich mit der Zeit ein Sicherheitsrisiko, sogar noch gefördert durch die Kerbwirkung der Verschleißmarken, ein. Die Felgenflanke mit der meisten Querschnittsschwächung wird dann irgendwann brechen. Es kann dabei zum Blockieren der Räder kommen, einhergehend mit der Zerstörung von Reifen und Schlauch. Weil aber die Felgenflanken dieser erfindungsgemäßen Lösung mit einem Hohrkammer versehen ist, wird die in der Hohlkammer innen am Felgenflankensteg angebrachte Verschleißmarke bei ihrem Erscheinen anzeigen, daß die Felge zu wechseln ist. Wird dieser Zustand übersehen, wird es zu keinem Totalausfall der Felgenflanke, so wie beim bekannten Stand der Technik kommen, weil zunächst der äußere Felgenflankensteg brechen und sich dabei an den inneren Felgenflankensteg, möglicherweise auch nur partiell, anlegen wird. Dadurch kann erstens der Bremsklotz nicht mehr einhaken und das Rad zum Blockieren führen. Zweitens ist selbst in diesem Fall ein fester Reifensitz garantiert, denn der verbleibende innere Teil der Felgenflanke wird weiter tragen, da nach der erfindungsgemäßen Lehre nicht mehr nur ein einziges tragendes Teil verhanden ist. Damit kann es zu keinem, zu einem Unfall führenden, Totalausfall der Felgenflanke kommen, da das Rad noch voll funktionsfähig bleibt. Die Verschleißmarken selbst besitzen auf Grund ihrer geschützten Anordnung auch nicht mehr die Nachteile des Standes der Technik, da sie vor Verunreinigungen, die die Erkennbarkeit des Gefährdungszustandes behindern, oder vor Einklemmungen von Fremdkörpern, die mit dem Einsetzen der Bremse zu Zerstörungen führen können, geschützt sind. Auch sind Manipulierungen, zur Vortäuschung eines höheren Sicherheitszustandes im Gegensatz zur Lösung nach dem Stand der Technik nicht mehr möglich, da sie für jedermann unzugänglich sind. Die Form der Verschleißmarken kann die vielfältigsten Ausbildungen haben, wenn sie nur eine Minderung der Materialtiefe des Felgenflankensteges vorsehen.
Das bisherige Sicherheitsrisiko des Standes der Technik, der ausnahmslos das Bohren der Nippellöcher vorsieht, ist durch diese erfindungsgemäße Lehre gleichfalls abgestellt. Zum einen ergibt sich durch den in die vorbekannte zentrale Hohlkammer hineinragenden Kragen eine Versteifung in der Umgebung der Löcher und der Verbindungsstifthohlräume und damit eine Erhöhung der Stabilität der Felge insgesamt, zum anderen sind keine scharfen Kanten mehr vorhanden als auch keine in der Hohlkammer verbleibenden Späne, die Risse im Felgenband und eine Zerstörung des Schlauches hervorrufen können.

An zwei Ausführungsbeispielen soll die Erfindung im folgenden näher erläutert werden.

Es zeigt:
- Fig. 1:: Eine Hohlkammerfelge im Querschnitt mit angedeuteten Felgenbremsenbacken und Speiche
- Fig. 2:: Eins Standardfelge im Querschnitt mit angedeuteten Felgenbremsenbacken

### Ausführungsbeispiel 1:

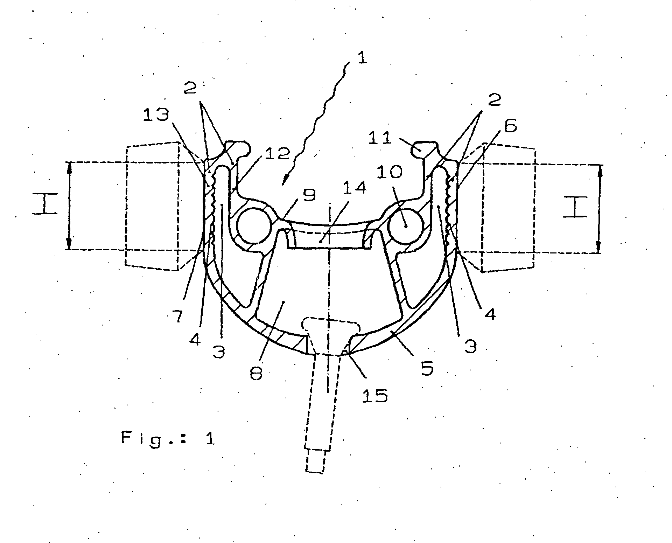

Es ist eine Sicherheitsfelge für Fahrräder als Hohlkammerfelge mit zwei sich gegenüber stehenden Felgenflanken und zwei dazwischen angeordneten, radial verlaufenden und hohlkammerbildenden Felgenstegen aus Aluminium gemäß Fig. 1 herzustellen . Es wird eine Ausbildung des Felgenkörpers derart vorgesehen, daß die beiden Felgenflanken 2 mit Hohlkammern 3 ausgestattet sind, die innen Verschleißmarken 4 besitzen und daß diese Felgenflanken 2 über die Innenseite 5 der Felge 1 bogenförmig miteinander in Verbindung stehen und daß die Nippellöcher 14, 15 des Felgenkörpers 1 eingedrückte/gestanzte Löcher sind. Die Hohlkammern 3 in den Felgenflanken 2 sind derart ausgestaltet, daß sie sich beidseitig von seitlich der vorbekannten Hohlkammer 8 zwischen der Innen- 5 und Außenseite 9 der Felge 1 und von unterhalb der gleichfalls vorbekannten Verbindungsstifthohlkammer 10 an dieser außen vorbei nach oben bis kurz unterhalb des Felgenhornes 11 in zunächst breiter dann weiter oben schmaler Ausdehnung erstrecken und oben etwa die 1,5-fache Ausdehnung in der Breite aufweist als die, die als Dicke für die Innen- 12 und Außenstege 13 der Felgenflanke 2 gilt. Die innere, die der Radachse zugewandte Seite 5 des Hohlfelgenkörpers 1 ist aus nicht bogenwechselnden Radien gebildet, somit im wesentlichen konvex zur Radachse gewölbt von der Außenseite 6 der einen Felgenflanke 2 zur Außenseite 7 der anderen Felgenflanke 2 verlaufend und geht beidseitig in eine im wesentlichen gerade verlaufende Außenseite 6, 7 an den Felgenflanken 2 über.
Die Nippellöcher 14 und 15 sind spanlos eingedrückte/gestanzte Löcher, wobei das eingedrückte Nippelloch 14 einen nach unten, in Richtung des vorbekannten Hohlraumes 8, somit in Richtung der Radachse weisenden, lochumlaufenden Kragen besitzt. Die Verschleißmarken 4 sind an der Innenseite des äußeren Felgenflankensteges 13 als 8 Rillen eingearbeitet und treten bei entsprechendem Verschleiß der Felgenbremsfläche als Linienstücke an der Felgenflankenaußenseite 6 zu tage oder es wird der Außensteg 13 der Felgenflanke 2 deformiert. Dabei bzw. danach wird er sich in der Folge dessen an den Innensteg 12 der Felgenflanke 2 anlegen. Es kommt zu keinem Bruch der Felge und damit zu keinem Unfall, da der Innensteg 12 der Felgenflanke 2 weiterhin die wirkenden Kräfte aufzunehmen vermag.

### Ausführungsbeispiel 2:

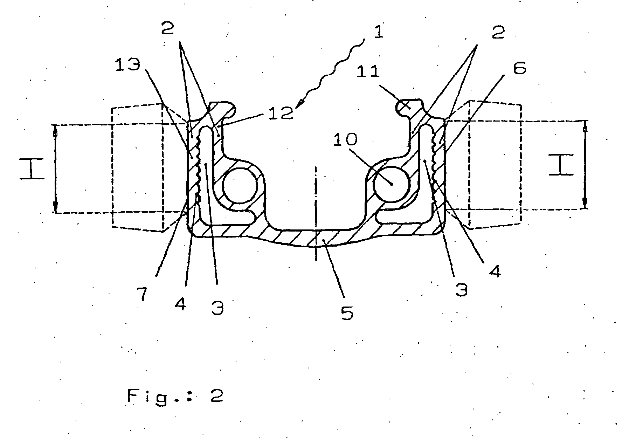

Das Ausführungsbeispiel 2 wird durch die Fig. 2 dargestellt. Hierbei handelt es sich um eine Standardfelge, die erfindungsgemäß in gleicher Weise mit Felgenflanken 2, die Hohlkammern 3 enthaltenen, ausgestattet ist. Wie an diesem Beispiel zu sehen ist, kann es ausreichen, daß sich die Hohlkammer 3 von kurz unterhalb des Felgenhornes 11 bis kurz unterhalb des untersten Angriffspunktes des Bremsklotzes erstreckt, somit eine Erstreckung aufweist, die geringfügig länger ist, als die Wirk-Höhe der Bremsklötzer, die sich durch den Verschleiß an diesen kontinuierlich ändert.

## Patentansprüche

1. Sicherheitsfelge (1) für Fahrräder und ähnliche Fahrzeuge als Standardoder Hohlkammerfelge mit zwei sich gegenüber stehenden Felgenflanken (2) und einem dazwischen angeordneten Felgensteg bzw. bei Hohlkammerfelgen dazwischen angeordnet radial verlaufenden und hohlkammerbildenden Felgenstegen als der Drehachse der Felge (1) zugewandte Innen- und der Drehachse abgewandten Außenseite (5, 9) der Felge (1),
**gekennzeichnet dadurch,**
**dass** die beiden Felgenflanken (2) mit Hohlkammern (3) ausgestattet sind, die innen Verschleißmarken (4) besitzen, und diese Felgenflanken (2) über die Innenseite (5) der Felge (1) bogenförmig miteinander in Verbindung stehen und dass die Nippellöcher (14), (15) des Felgenkörpers (1) eingedrückte/gestanzte Löcher sind.

2. Sicherheitsfelge für Fahrräder und ähnliche Fahrzeuge nach Anspruch 1,
**gekennzeichnet dadurch**
**dass** die Hohlkammern (3) in den Felgenflanken (2) derart ausgestaltet sind, dass sie sich von kurz unterhalb des Felgenhornes (11) in einer Ausdehnung nach unten erstrecken, die geringfügig länger ist, als die Wirk-Höhe (H) der Bremsklötzer, somit die sich ständig verändernde Wirk-Höhe (H) der verschiedenen Bremsklötzer sicher abgedeckt ist.

3. Sicherheitsfelge für Fahrräder und ähnliche Fahrzeuge nach Anspruch 1,
**gekennzeichnet dadurch**
**dass** die Verschleißmarken (4) auf der Innenseite des äußeren Steges (13) der Felgenflanke (2) angebracht sind und als Marken mit unterschiedlichen Gestaltungsformen bei der Ausbildung der Vertiefungen in das Felgenflankenstegmaterial hinein geschaffen sind.

4. Sicherheitsfelge für Fahrräder und ähnliche Fahrzeuge nach Anspruch 1,
**gekennzeichnet dadurch**
**dass** als Nippellöcher (14), (15) spanlos eingedrückte/gestanzte Löcher vorgesehen sind.

5. Sicherheitsfelge für Fahrräder und ähnliche Fahrzeuge nach Anspruch 1,
**gekennzeichnet dadurch**
**dass** das eingedrückte Nippelloch (14) einen nach unten, in Richtung des vorbekannten Hohlraumes (8), somit in Richtung der Radachse weisenden lochumlaufenden Kragen besitzt.

## Claims

1. A safety rim (1) for bicycles and similar vehicles as a standard or cavity-type rim with two opposite rim flanks (2) and an intermediate rim web and in the case of cavity-type rims intermediate radial rim webs forming cavities representing an inner side facing the axis of rotation and an outer side facing away from the axis of rotation (5, 9) of the rim (1),
**characterised by**
that the two rim flanks (2) are provided with cavities (3) which inside possess wear indicators (4), these rim flanks (2) are connected in the form of an arch via the inner side (5) of the rim (1), and the nipple holes (14, 15) of the rim body (1) are pressed/punched holes.

2. A safety rim for bicycles and similar vehicles as claimed in Claim 1,
**characterised by**
that the cavities (3) in the rim flanks (2) are formed in such a way that they reach down from just below the rim flare (11) at a length which is marginally longer than the effective height (H) of the brake blocks, whereby the constantly changing effective height (H) of different brake blocks is covered reliably.

3. A safety rim for bicycles and similar vehicles as claimed in Claim 1,
**characterised by**
that the wear indicators (4) are located on the inner side of the outer web (13) of the rim flank (2) and are realised as indicators in various designs by forming depressions in the rim flank web material.

4. A safety rim for bicycles and similar vehicles as claimed in Claim 1,
**characterised by**
that chiplessly produced pressed/punched holes are provided as nipple holes (14, 15).

5. A safety rim for bicycles and similar vehicles as claimed in Claim 1,
**characterised by**
that the pressed nipple hole (14) possesses a surrounding collar facing downwards, in the direction of the previous known cavity (8), and thus in the direction of the wheel axis.

## Revendications

1. Jante de sécurité (1) pour bicyclettes et véhicules similaires sous forme de jante standard ou à chambre creuse avec deux flancs de jante en vis à vis (2) et une âme de jante insérée entre les deux ou en cas de jantes à chambre creuses, des âmes de jantes disposées à l'intérieur de façon radiale et formant des âmes de jante à chambre creuse par l'axe rotatif de la jante (1) orientée vers l'intérieur de l'axe rotatif ou vers l'extérieur (5, 9) de la jante (1),
**qui se distingue par le fait,**
que les deux flancs de jantes (2) sont équipés de chambres creuses (3), qui possèdent des marques d'usure (4) internes, et que ces flancs de jantes (2) sont reliés via le côté intérieur (5) de la jante (1) en forme d'arc et que les trous d'écrous de rayon (14, 15) sont des trous pressés/poinçonnés dans le corps de jante (1).

2. Jante de sécurité pour bicyclettes et véhicules similaires selon la revendication 1,
**qui se distingue par le fait,**
que les chambres creuses (3) sont disposées de telle manière dans les flancs de jante (2), qu'elles s'étendent vers le bas en extension sous le rebord de jante (11), qui est juste un peu plus long, que la hauteur efficace (H) des plaquettes de frein, et ainsi la hauteur efficace (H) en constante variation des différentes plaquettes de frein est couverte de manière sûre.

3. Jante de sécurité pour bicyclettes et véhicules similaires selon la revendication 1,
**qui se distingue par le fait,**
que les marques d'usure (4) sont intégrées dans la face interne de l'âme externe (13) du flanc de jante (2) et que les marques sont façonnées de formes différentes dans la formation des creux dans le matériau du flanc de jante.

4. Jante de sécurité pour bicyclettes et véhicules similaires selon la revendication 1,
**qui se distingue par le fait,**
que les trous sont pressés/poinçonnés sans enlèvement de copeaux pour les écrous de rayons (14, 15).

5. Jante de sécurité pour bicyclettes et véhicules similaires selon la revendication 1,
**qui se distingue par le fait,**
que le trou d'écrou de rayon (14) pressé possède un col autour du trou, orienté vers le bas, en direction du corps creux (8) en amont, et ainsi en direction de l'axe de roue.
